# EUROPÄISCHE PATENTSCHRIFT

(11) **EP 2 864 180 B1**
(45) Veröffentlichungstag und Bekanntmachung des Hinweises auf die Patenterteilung: **22.06.2016**
(21) Anmeldenummer: 13715123.9
(22) Anmeldetag: 11.03.2013
(51) Int. Cl.: B62D 3/12, F16H 55/28

(54) **ZAHNSTANGENLENKUNG**
RACK-AND-PINION STEERING MECHANISM
DIRECTION À CRÉMAILLÈRE

(30) Priorität: 22.06.2012 DE 102012012248
(43) Veröffentlichungstag der Anmeldung: 29.04.2015
(73) Patentinhaber: ThyssenKrupp Presta AG, 9492 Eschen (LI); ThyssenKrupp AG, 45143 Essen (DE)
(72) Erfinder: KÖNIG, Walter, D-88239 Wangen (DE); STECK, Philippe, CH-3123 Belp (CH)
(74) Vertreter: ThyssenKrupp Intellectual Property GmbH
(86) Internationale Anmeldenummer: PCT/EP2013/000712
(87) Internationale Veröffentlichungsnummer: WO 2013/189559

(56) Entgegenhaltungen:
- EP-A2- 1 184 255
- EP-A2- 2 050 656

## Beschreibung

Die Erfindung betrifft eine Zahnstangenlenkung für ein Kraftfahrzeug nach dem Oberbegriff des unabhängigen Anspruchs 1.

Bei Zahnstangenlenkungen ist im Bereich einer Zahnstange üblicherweise ein Druckstück angeordnet, welches derart ausgelegt ist, dass es die Zahnstange gegen ein mit der Zahnstange kämmendes Ritzel drückt. Dadurch kann ein Spiel zwischen der Zahnstange und dem Ritzel und deshalb ein durch Spiel erzeugtes Geräusch vermieden werden. Bei den bekannten Zahnstangenlenkungen können durch Spiel erzeugte Geräusche aber nicht ganz vermieden werden.

Im Stand der Technik ist aus der EP 2 050 656 A2 eine Zahnstangenlenkung der eingangs genannten Art bekannt, bei der allerdings die erwähnte Problematik auftritt.

Es ist deshalb eine Aufgabe der vorliegenden Erfindung, die eingangs erwähnte Zahnstangenlenkung weiterzuentwickeln, die eine verminderte Geräuschentwicklung aufweist.

Eine Zahnstangenlenkung zur Lösung der Aufgabe weist die Merkmale des unabhängigen Anspruchs 1 auf. Danach wird eine Zahnstangenlenkung für ein Kraftfahrzeug vorgeschlagen, mit einem Gehäuse, in dem eine Zahnstange verschieblich gelagert ist, wobei in dem Gehäuse ein Druckstück gleitbeweglich quer zu einer Längsachse der Zahnstange in einer Bohrung vorgesehen ist, wobei das Druckstück elastisch beaufschlagt ist, derart, dass es mit einer Auflagefläche zumindest zum Teil auf der Zahnstange aufliegt, die eine symmetrisch ausgebildete Auflagefläche aufweist, und wobei die Zahnstange auf einer dem Druckstück gegenüberliegenden Seite zumindest zum Teil mit einem Ritzel in Eingriff steht, wobei die Auflagefläche des Druckstücks wenigstens zum Teil asymmetrisch ausgebildet ist und die Auflagefläche des Druckstücks wenigstens zwei schräg zueinander angeordnete Führungsflächen aufweist, die im Wesentlichen mit einer Oberseite, vorzugsweise zwei schräg zueinander angeordnete Auflageflächen, der Zahnstange korrespondieren, wobei vorzugsweise eine erste Führungsfläche anders als eine zweite Führungsfläche ausgebildet ist.

Durch die asymmetrische Gestaltung der Auflagefläche des Druckstücks wird die Zahnstange nicht ausschließlich in Richtung der Längsachse des Druckstücks gedrängt, sondern zum Teil auch in Richtung einer Längsachse des Ritzels. Dadurch gelangt die Zahnstange besser in Eingriff mit dem Ritzel, als dass das bislang möglich war.

Nach einer bevorzugten Ausgestaltung der Erfindung, kann zumindest ein Teil der Auflagefläche derart ausgebildet ist, dass das Druckstück die Zahnstange derart gegen das Ritzel drängt, dass die Längsachse der Zahnstange mit Versatz zu einer Längsachse des Druckstücks angeordnet ist. Die Auflagefläche ist derart gestaltet, dass die Längsachse der Zahnstange durch das Druckstück aus einer theoretischen Mitte gedrängt wird, wobei eine Druckkraft des Druckstücks im Wesentlichen in Richtung der Längsachse des Druckstücks gerichtet ist. Eine theoretische Mitte bezieht sich auf eine Überschneidung der beiden Längsachsen in einem entspannten Zustand, wenn also die Zahnstange durch das Druckstück nicht mit einer Kraft beaufschlagt ist.

Weiterhin kann nach einer anderen Ausführungsform die Zahnstange derart gegen das Ritzel gedrängt sein, dass eine Längsachse der Zahnstange versetzt zu der Längsachse des Druckstücks in Richtung einer Längsachse des Ritzels angeordnet ist. Durch die Asymmetrie des Druckstücks wird die Zahnstange entsprechend des Drucks und der konstruktiven Ausformung der Bauteile entlang einer Längserstreckung des Ritzels verschoben.

Ebenso kann vorteilhaft vorgesehen sein, wenn die zweite Führungsfläche gegenüber der ersten Führungsfläche in Richtung der Oberseite der Zahnstange zumindest teilweise hervorsteht. Durch diesen Versatz der beiden Führungsflächen bezüglich der Längsachse des Druckstücks wird die Zahnstange von der zweiten Führungsfläche in Richtung der ersten Führungsfläche gedrängt und somit in Längsrichtung des Ritzels.

Weitere vorteilhafte Ausgestaltungen der Erfindung sind in den Unteransprüchen wiedergegeben.

Ein bevorzugtes Ausführungsbeispiel wird nachfolgend anhand der Zeichnung näher erläutert. In dieser zeigen:

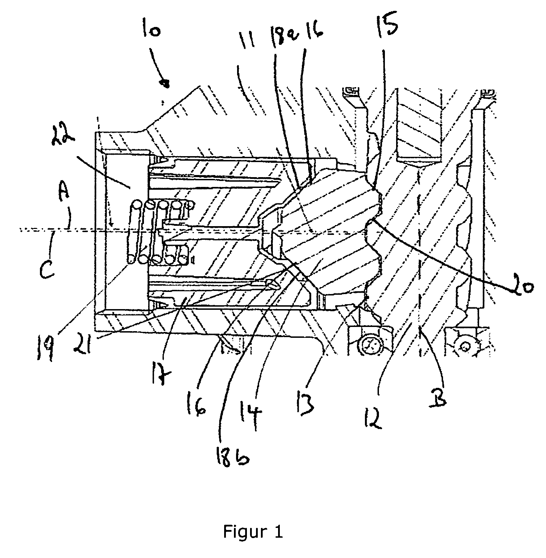

- Fig. 1: ein Schnitt durch eine Zahnstangenlenkung.

In der Fig. 1 ist eine Zahnstangenlenkung 10 mit einem Lenkgehäuse 11 in einem Querschnitt dargestellt. In dem Lenkungsgehäuse 11 ist eine Ritzelwelle bzw. ein Ritzel 12 drehbar gelagert. Die Ritzelwelle 12 kämmt im Bereich einer Verzahnung 13 mit einer Zahnstange 14 und die Zahnstange 14 ist in Richtung einer Längsachse, die senkrecht auf der Zeichenebene steht, verschieblich in dem Lenkungsgehäuse 11 gelagert. Die Längsachse der Zahnstange 14 schneidet darüber hinaus mit einer in der Fig. 1 dargestellten Querachse A der Zahnstange 14, die mittig in der Zahnstange 14 angeordnet ist. Zur weiteren Beschreibung bietet es sich an, die Lage der einzelnen Bauelemente mit Bezug zu den Achsen zu beschreiben. Neben der Längsachse der Zahnstange 14 ist eine Drehachse B des Lenkritzels 12 dargestellt, die in der Zeichenebene verläuft. Ebenfalls in der Zeichenebene verläuft eine Längsachse C eines Druckstücks, wobei die Längsachse C senkrecht zu der Drehachse B und zu der Längsachse der Zahnstange 14 verläuft sowie parallel zu der Querachse A der Zahnstange 14.

Die Zahnstange 14 ist in dem dargestellten Bereich mit einem Zahnsegment 15 versehen, das an der dem Lenkritzel 12 zugewandten Seite der Zahnstange 14 in bekannter Weise ausgebildet ist. Das Zahnsegment 15 stellt eine etwa ebene Fläche dar. Ausgehend von dem Zahnsegment 15 ist die Zahnstange 14 in Richtung ihres Umfangs mit zwei zueinander in spitzem Winkel geneigten Führungsflächen 16 versehen, die nach Art eines Trapezes im Anschluss an das Zahnsegment 15 aufeinander zu verlaufen. Die dem Zahnsegment 15 abgewandten Enden der Führungsflächen 16 sind vorzugsweise über einen bogenförmigen Umfangsbereich miteinander verbunden. Dieser Umfangsbereich kann auch eine beliebige andere Kontur aufweisen. Die Querschnittsgestalt der Zahnstange 14 in diesem Bereich entspricht etwa einem gleichschenkligen Trapez, bei dem die parallelen Seiten abgerundet und an einer Seite mit dem Zahnsegment 15 versehen worden sind. Ein fiktiver Schnittpunkt der beiden symmetrisch angeordneten Führungsflächen 16, der über dem Umfangsbereicht angeordnet ist, schneidet mit der Querachse C.

Weiterhin ist in dem Lenkgehäuse 11 ein in an sich bekannte Weise angeordnetes Druckstück 17 vorgesehen, das über Führungsflächen 18 mit der Zahnstange 14 in Kontakt steht. In dem Lenkgehäuse 11 ist für das Druckstück 17 eine Ausnehmung vorgesehen, die im Bereich der Zahnstange 14 eine Öffnung aufweist. Das Druckstück 17 ist auf einer der Zahnstange 14 gegenüberliegenden Seite federelastisch mittels einer Feder 19 gelagert, wobei das Druckstück 17 dadurch gegen die Zahnstange 14 gedrängt ist. Durch den Druck auf die Zahnstange 14 ist diese gegen das Ritzel 12 gedrängt, wodurch Geräusche während des Betriebs der Zahnstangenlenkung 10 vermieden werden können. Die Führungsflächen 18 des Druckstücks 17 korrespondieren im Wesentlichen mit den Führungsflächen 16 der Zahnstange, wobei eine zweite Führungsfläche 18b gegenüber einer ersten Führungsfläche 18a leicht überhöht ist.

Die Führungsflächen 18 sind mit dem gleichen Winkel zueinander geneigt angeordnet, wie die Führungsflächen 16 der Zahnstange 14. Durch die Überhöhung der zweiten Führungsfläche 18b ist jedoch ein fiktiver Schnittpunkt versetzt zu der Längsachse C des Druckstücks 17, weshalb das Druckstück 17 im Bereich der Führungsflächen 18 asymmetrisch ausgebildet ist.

Durch die Überhöhung der zweiten Führungsfläche 18b wird bei der in Längsrichtung des Druckstücks 17 gerichteten Kraft die Zahnstange 14 nicht nur gegen die Ritzelwelle 12 in Längsrichtung des Druckstücks 17 gedrängt, sondern durch die schräge Auflagefläche zwischen Zahnstange 14 und Druckstück 17 auch leicht seitlich. Im Bereich der zweiten Führungsfläche 18b und der korrespondierenden Führungsfläche 16 der Zahnstange 14 kommt es zu einem Gleiten, bei dem die Zahnstange 14 in Richtung der ersten Führungsfläche 18a und gleichzeitig in Axialrichtung des Druckstücks 17 gedrängt wird. Die Überhöhung erzeugt deshalb eine Relativverschiebung der Zahnstange 14 hinsichtlich des Druckstücks 17, da das Druckstück 17 in der Ausnehmung lediglich längsverschieblich geführt ist und die Zahnstange 14 nicht nur in ihrer Längserstreckung beweglich ist, sondern auch seitlich.

Durch die seitliche Bewegung der Zahnstange 14 werden korrespondierende Zahnflanken 20 von dem Zahnsegment 15 und der Verzahnung 13 der Ritzelwelle 12 spielfrei gehalten, da die Zahnstange 14 gegenüber der Ritzelwelle 12 zumindest in Längsrichtung des Ritzels 12 verspannt wird.

Die Überhöhung im Bereich der zweiten Führungsfläche 18b wird gemäß einem Ausführungsbeispiel der Erfindung durch einen Aufsatz 21, wie in der Fig. 1 dargestellt ist, erreicht, der auf das Druckstück 17 aufgesetzt und mit diesem verbunden wird. Je nach Größe und Kontur der einzelnen Bauteile ist der Aufsatz 21 unterschiedlich groß zu wählen. Der Aufsatz 21 kann beispielsweise auch als eine Schablone ausgestaltet sein, bei dem dieser nicht nur die zweite Führungsfläche 18b, sondern auch die erste Führungsfläche 18a bedeckt, damit der Aufsatz 21 besser auf dem Druckstück 17 hält. Ebenso kann ein unterer Bereich des Druckstücks 17, im Bereich der Auflagefläche, zumindest teilweise von dem Aufsatz 21 bedeckt sein, wobei in den vorstehend genannten weiteren Beispielen der Bereich des Aufsatz 21, der die zweite Führungsfläche 18b bedeckt dicker als die übrigen Bereiche des Aufsatz 21 ausgebildet ist.

Der Aufsatz 21 wird mit dem Druckstück 17 verbunden, wobei der Aufsatz form- und/oder kraftschlüssig bzw. auch stoffschlüssig mit dem Druckstück 17 verbunden wird. Dabei kann der Aufsatz 21 entweder geklebt, verschweißt, gelötet oder verklemmt werden. Es ist aber beispielsweise auch möglich, den Aufsatz lediglich zwischen dem Druckstück 17 und der Zahnstange 14 zu positionieren, wobei dann durch den Druck des Druckstücks 17 auf die Zahnstange 14, der Aufsatz 21 zwischen den beiden Bauteilen gehalten wird.

Das vorstehend beschriebene Druckstück 17 mit einer Überhöhung einer der Führungsflächen 18 kann auch nachträglich in einer Zahnstangenlenkung angeordnet werden. Nachträglich bedeutet in diesem Fall, dass ein solches Druckstück 17 auch in bereits bestehende Zahnstangenlenkungen 10 eingebaut werden kann. Zahnstangenlenkungen 10 mit einem Druckstück 17, weisen in an sich bekannter Weise in dem Gehäuse 11 eine nach außen gerichtete Öffnung auf. Durch die Öffnung, die mit einem Deckel 22 geschlossen gehalten wird, kann ein altes Druckstück entnommen und durch das vorstehend beschriebene neue Druckstück 17 eingesetzt werden.

## Patentansprüche

1. Zahnstangenlenkung für ein Kraftfahrzeug, mit einem Gehäuse (11), in dem eine Zahnstange (14) verschieblich gelagert ist, wobei in dem Gehäuse (11) ein Druckstück (17) gleitbeweglich quer zu einer Längsachse der Zahnstange (14) in einer Bohrung vorgesehen ist, wobei das Druckstück (17) elastisch beaufschlagt ist, derart, dass es mit einer Auflagefläche (18) zumindest zum Teil auf der Zahnstange (14) aufliegt, die eine symmetrisch ausgebildete Auflagefläche (16) aufweist, und wobei die Zahnstange (14) auf einer dem Drückstück (17) gegenüberliegenden Seite zumindest zum Teil mit einem Ritzel (12) in Eingriff steht, wobei die Auflagefläche (18) des Druckstücks (17) wenigstens zum Teil asymmetrisch ausgebildet ist, **dadurch gekennzeichnet, dass** die Auflagefläche des Druckstücks (17) wenigstens zwei schräg zueinander angeordnete Führungsflächen (18a, 18b) aufweist, die im Wesentlichen mit einer Oberseite, vorzugsweise zwei schräg zueinander angeordnete Auflageflächen (16), der Zahnstange (14) korrespondieren, wobei vorzugsweise eine erste Führungsfläche (18a) anders als eine zweite Führungsfläche (18b) ausgebildet ist.

2. Zahnstangenlenkung nach Anspruch 1, **dadurch gekennzeichnet, dass** zumindest ein Teil der Auflagefläche (18) derart ausgebildet ist, dass das Druckstück (17) die Zahnstange (14) derart gegen das Ritzel (12) drängt, dass die Längsachse der Zahnstange mit Versatz zu einer Längsachse des Druckstücks (C) angeordnet ist.

3. Zahnstangenlenkung nach einem der vorangehenden Ansprüche, **dadurch gekennzeichnet, dass** die Zahnstange (14) derart gegen das Ritzel (12) gedrängt ist, dass eine Längsachse der Zahnstange (14) versetzt zu der Längsachse des Druckstücks (17) in Richtung einer Längsachse des Ritzels (12) angeordnet ist.

4. Zahnstangenlenkung nach einem der vorangehenden Ansprüche, **dadurch gekennzeichnet, dass** die zweite Führungsfläche (18b) gegenüber der ersten Führungsfläche (18a) in Richtung der Oberseite der Zahnstange (14) zumindest teilweise hervorsteht.

5. Zahnstangenlenkung nach einem der vorangehenden Ansprüche, **dadurch gekennzeichnet, dass** die zweite Führungsfläche (18b) eine Überhöhung aufweist, wobei ein Schnittpunkt der beiden Führungsflächen (18) mit Versatz zu der Längsachse (C) des Druckstücks (17) angeordnet ist.

## Claims

1. Rack-and-pinion steering system for a motor vehicle, having a housing (11), in which a rack (14) is mounted displaceably, a pressure piece (17) being provided in the housing (11) in a bore such that it can be moved slidingly transversely with respect to a longitudinal axis of the rack (14), the pressure piece (17) being loaded elastically in such a way that it rests with a contact face (18) at least partially on the rack (14) which has a symmetrically configured contact face (16), and the rack (14) being in engagement at least partially with a pinion (12) on a side which lies opposite the pressure piece (17), the contact face (18) of the pressure piece (17) being at least partially of asymmetrical configuration, **characterized in that** the contact face of the pressure piece (17) has at least two guide faces (18a, 18b) which are arranged obliquely with respect to one another and correspond substantially with an upper side, preferably two contact faces (16) which are arranged obliquely with respect to one another, of the rack (14), a first guide face (18a) preferably being configured differently to a second guide face (18b).

2. Rack-and-pinion steering system according to Claim 1, **characterized in that** at least part of the contact face (18) is configured in such a way that the pressure piece (17) pushes the rack (14) against the pinion (12) in such a way that the longitudinal axis of the rack is arranged with an offset with respect to a longitudinal axis of the pressure piece (C).

3. Rack-and-pinion steering system according to one of the preceding claims, **characterized in that** the rack (14) is pushed against the pinion (12) in such a way that a longitudinal axis of the rack (14) is arranged offset with respect to the longitudinal axis of the pressure piece (17) in the direction of a longitudinal axis of the pinion (12).

4. Rack-and-pinion steering system according to one of the preceding claims, **characterized in that** the second guide face (18b) protrudes at least partially with respect to the first guide face (18a) in the direction of the upper side of the rack (14).

5. Rack-and-pinion steering system according to one of the preceding claims, **characterized in that** the second guide face (18b) has an elevation, a point of intersection of the two guide faces (18) being arranged at an offset with respect to the longitudinal axis (C) of the pressure piece (17).

## Revendications

1. Direction à crémaillère pour un véhicule automobile, comprenant un boîtier (11) dans lequel une crémaillère (14) est supportée de manière déplaçable, une pièce de pression (17) étant prévue dans un alésage dans le boîtier (11) de manière à pouvoir se déplacer par glissement transversalement à un axe longitudinal de la crémaillère (14), la pièce de pression (17) étant sollicitée élastiquement de telle sorte qu'elle s'applique avec une surface d'appui (18) au moins en partie sur la crémaillère (14) qui présente une surface d'appui (16) réalisée de manière symétrique, et la crémaillère (14) étant en prise au moins en partie avec un pignon (12) sur un côté opposé à la pièce de pression (17), la surface d'appui (18) de la pièce de pression (17) étant réalisée au moins en partie de manière asymétrique, **caractérisée en ce que** la surface d'appui de la pièce de pression (17) présente au moins deux surfaces de guidage (18a, 18b) disposées obliquement l'une par rapport à l'autre, qui correspondent essentiellement à un côté supérieur, de préférence à deux surfaces d'appui (16) disposées obliquement l'une par rapport à l'autre de la crémaillère (14), une première surface de guidage (18a) étant de préférence réalisée différemment d'une deuxième surface de guidage (18b).

2. Direction à crémaillère selon la revendication 1, **caractérisée en ce qu'**au moins une partie de la surface d'appui (18) est réalisée de telle sorte que la pièce de pression (17) presse la crémaillère (14) contre le pignon (12) de telle sorte que l'axe longitudinal de la crémaillère soit disposé avec un décalage par rapport à l'axe longitudinal de la pièce de pression (C).

3. Direction à crémaillère selon l'une quelconque des revendications précédentes, **caractérisée en ce que** la crémaillère (14) est pressée contre le pignon (12) de telle sorte qu'un axe longitudinal de la crémaillère (14) soit disposé de manière décalée par rapport à l'axe longitudinal de la pièce de pression (17) dans la direction d'un axe longitudinal du pignon (12).

4. Direction à crémaillère selon l'une quelconque des revendications précédentes, **caractérisée en ce que** la deuxième surface de guidage (18b) fait saillie au moins en partie par rapport à la première surface de guidage (18a) dans la direction du côté supérieur de la crémaillère (14).

5. Direction à crémaillère selon l'une quelconque des revendications précédentes, **caractérisée en ce que** la deuxième surface de guidage (18b) présente un rehaussement, un point d'intersection des deux surfaces de guidage (18) étant disposé avec un décalage par rapport à l'axe longitudinal (C) de la pièce de pression (17).
